## Europäisches Patentamt
## European Patent Office
## Office européen des brevets

(11) Publication number: **0 162 399**
**B1**

(12) **EUROPEAN PATENT SPECIFICATION**

(45) Date of publication of patent specification: **19.07.89**

(21) Application number: **85105878.4**

(22) Date of filing: **13.05.85**

(51) Int. Cl.⁴: **B 60 Q 1/14, H 01 H 13/60**

(54) Switch device and switch control for vehicles fitted with such a device.

(30) Priority: **22.05.84 IT 6751384**

(43) Date of publication of application:
**27.11.85 Bulletin 85/48**

(45) Publication of the grant of the patent:
**19.07.89 Bulletin 89/29**

(84) Designated Contracting States:
**DE FR GB SE**

(56) References cited:
**DE-A-2 618 605**
**DE-A-2 712 180**
**DE-B-2 936 187**
**DE-C- 962 536**
**FR-A-2 320 625**
**US-A-2 853 565**

(73) Proprietor: **FIAT AUTO S.p.A.**
**Corso Giovanni Agnelli 200**
**I-10135 Torino (IT)**

(72) Inventor: **Recluta, Franco**
**Via Osasco, 30**
**I-10100 Torino (IT)**
Inventor: **Contato, Ugo**
**Corso Siracusa, 128**
**I-10100 Torino (IT)**

(74) Representative: **Bongiovanni, Guido et al**
**c/o Ingg. Carlo e Mario Torta Via Viotti 9**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a switch device, in particular, for a vehicle switch control, designed in such a manner as to be operated by one of the control levers on the said switch control, for switching from town to road lights or vice versa, and possibly also for controlling emergency flashing of the road lights.

Switching from town to road lights on a vehicle is known to be performed usually by changing the angular position of a control lever forming part of the switch control of the vehicle and usually projecting radially from the steering column. Emergency flashing of the road lights is also known to be performed by the driver pulling the aforementioned lever up into an unstable control position from which it returns automatically when released.

As the Highway Code demands road lights over a given speed, and that the same be dipped on encountering oncoming vehicles, drivers are obviously forced to switch continually from one to the other, particularly when driving along main roads at night. In addition to being awkward and/or annoying, such continual operation of the control lever entails a fairly wide movement on the part of the driver which also distracts his/her attention from the road. For this reason, contrary to the Highway Code, many drivers often dispense with road lights, making almost permanent use of town lights, and only occasionally operationg the emergency flashing control along dark stretches of road and/or round bends, the lever on the said flashing control being much easier to operate in that it may be pulled up without abandoning the steering wheel and without distracting the drivers' attention from the road. Furthermore, once released, the said lever returns automatically to its original position where it may easily be located by touch whenever required.

This problem has been overcome by means of devices that allows the road/town light switching to be performed simply by pulling a lever, at the same manner that the emergency flashing control lever. A device of this type is, for instance, that described in the DE—B—2 936 187. Nevertheless such devices usually do not carry out simultaneously the operation of the road/town light and of the emergency flashing devices, so that the driver has two lever to operate with possible confusion; moreover, likewise the device of DE—B—2 936 187, they are of relatively complex construction, of not completely reliable operation and of relatively large bulk.

The aim of the present invention is to provide a switch device, particularly for a switch control on a vehicle, which, in addition to being cheap, highly reliable and easy to assemble, may be connected to a normal switch control lever for enabling operation of the said lever for switching from town to road lights or vice versa in the same manner as currently employed for emergency flashing of the road lights, and, simultaneously, may be connected to the same lever to enable also emergency flashing of the road lights, i.e. designed to enable the said lever on the switch control to perform both the aforementioned functions. Finally, a further aim of the present invention is to provide a switch control designed to be assembled automatically with the said switch device and having a reduced overall bulk.

With these aims in view, the present invention relates to a switch device, particularly for a vehicle switch control, comprising a load-bearing frame, a respective printed circuit having respective conducting tracks, a rocker arm housed in idle manner inside the said frame and fitted, facing the said printed circuit, with a respective sliding blade contact designed to cooperate with the said conducting tracks, a slide housed in axially-sliding manner inside the said frame and having activating means projecting from the same, retaining means for selectively setting the said rocker arm in two different angular positions, in which different conducting tracks on the said printed circuit are engaged by the said sliding contact, and transmission means for selectively and alternatively displacing the said rocker arm from one to the other of the said two angular positions following displacement of the said slide towards the said rocker arm, characterized in that said load bearing frame is closed in correspondence with opposite faces of the same by a pair of facing printed circuits secured integral with said frame in such a manner as to define, with the said frame, a casing for housing said slide and said rocker arm; said printed circuits having supporting holes in which respective opposite connecting pins of said rocker arm are idly secured, a first of said printed circuits being provided with circular conducting tracks defining said conducting tracks for said sliding contact of said rocker arm and a second of said printed circuits being provided with a pair of rectilinear conducting tracks faced to said circular conducting tracks and adapted to be engaged by a second sliding contact rigid with said slide, when the latter is displaced towards said rocker arm; said slide being secured in sliding manner against flexible contrasting means designed to oppose to said displacement towards said rocker arm inside respective guide formed laterally inside the said frame and being provided with a through opening housing at least partially said rocker arm substantially co-planar with said slide; said transmission means comprising a lever, a first end of which is housed in mobile manner inside a cavity formed inside the rocker arm through a circumferential opening thereof, and a second, essentially-fork-shaped, end of which is hinged inside a flexible fork-shaped projection on the said slide; and a torsion spring also essentially fork-shaped, secured at one end to said rocker arm and at the other end to said second end of said lever.

, A non-limiting arrangement of the present invention will now be described with reference to the attached drawings in which:

Fig. 1 shows a partial view of a switch control according to the present invention;

Fig. 2 shows an enlarged longitudinal section of a switch device according to the present invention;

Figs. 3 and 4 show sections along lines III—III and IV—IV respectively in Fig. 2;

Figs. 5, 6, 7, 8 and 9 show respective details of the Fig. 2 switch device.

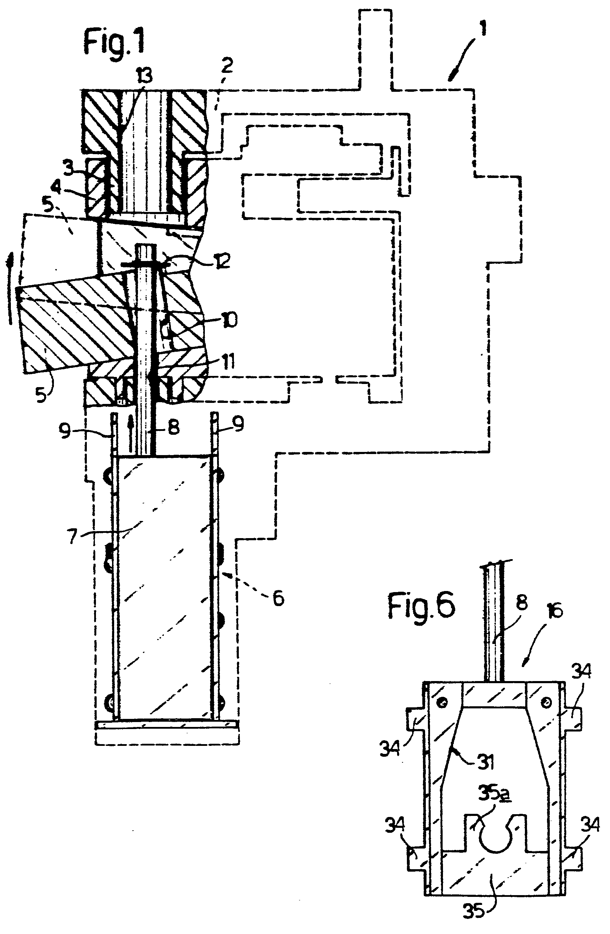

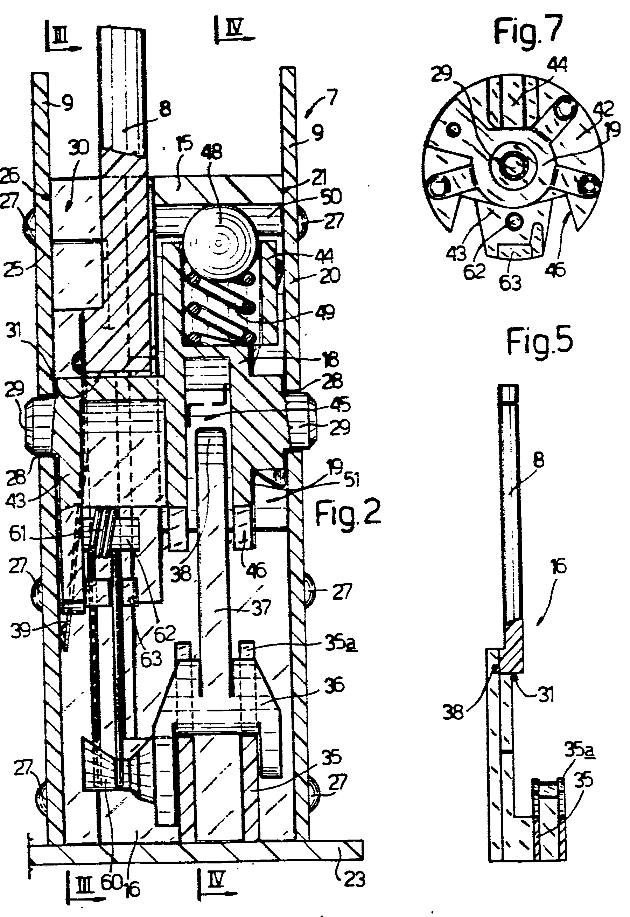

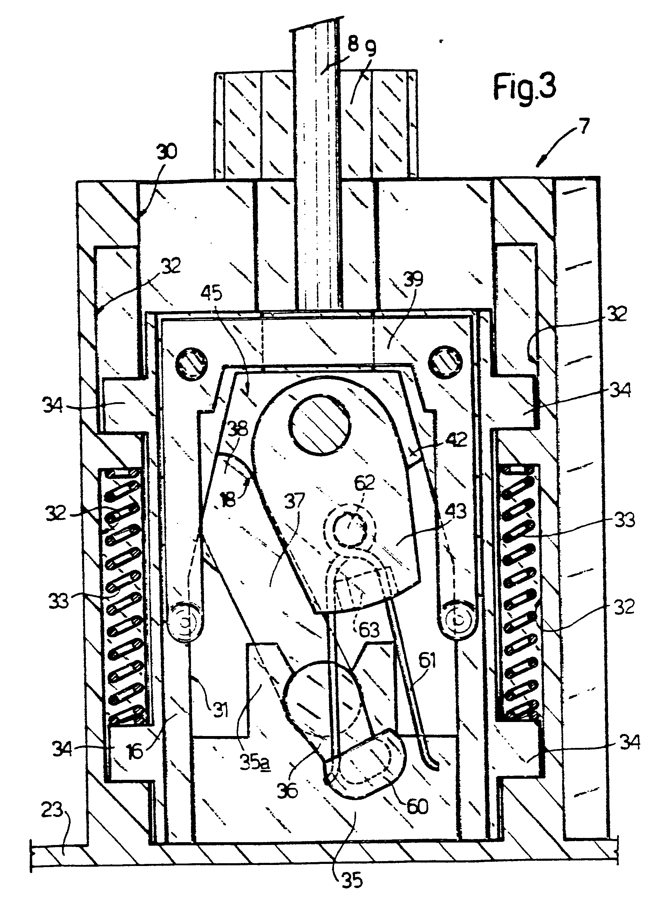

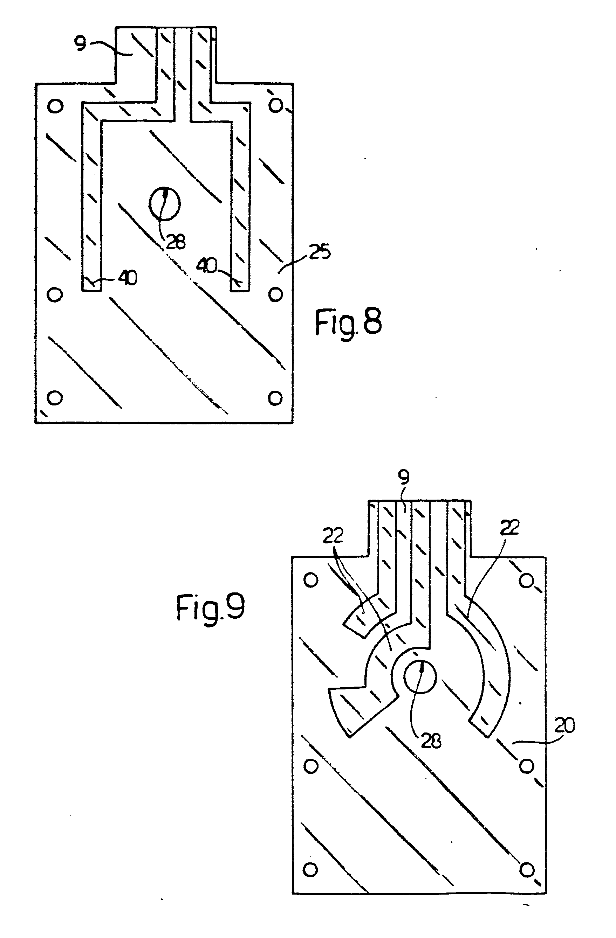

Number 1 in Fig. 1 indicates a switch control for any known type of vehicle (not shown), the said control comprising a box or supporting member 2 inside which is hinged a control lever 5, e.g. by means of pin 3 fitted in idle manner with bushing 4. As control 1 may be of any known type, it is shown only schematically and in part, and the following description limited to what is already known. According to the present state of the art, lever 5 is hinged on to bushing 4 so as to turn in relation to the latter round an axis perpendicular an axis to that of pin 3, the axis of the latter being essentially parallel to that of the steering column to/in which control 1 is fitted and/or housed. When control 1 is assembled, lever 5 therefore projects radially in relation to the said steering column on the vehicle, thus enabling it to be turned, in known manner, by the user into different angular positions, and also, in known manner, to be pulled by the user, in the direction of the arrow in Fig. 1, from the rest position shown by the continuous black line in Fig. 1 into the operating position shown by the dotted line in Fig. 1, the said operating position being unstable in that, in such a position, lever 5 is opposed by appropriate known contrasting means (not shown). Control 1 according to the present invention differs from similar known types of controls in that box or supporting member 2 is provided with a housing 6 for a switch 7 shaped essentially like a parallelepiped box and having an axially-sliding control rod 8 and electrical connectors 9 designed to fit into further electrical connectors (not shown) of known type inside box 2, so as to connect switch 7 to the electrical system on the vehicle of which control 1 forms part. Rod 8 is of such a length as to engage a through hole 10 formed through lever 5 which is reached by rod 8 passing through box 2 and bushing 4 through respective coaxial holes 11 formed coaxially with pin 3 and rod 8 itself. The latter is secured to lever 5 by means of a shoulder ring 12 fitted on to rod 8 itself and larger in diameter than hole 10. The said ring 12 may be fitted on to rod 8, with switch 7 already housed inside box 2 and lever 5 already assembled and engaged by rod 8, by means of an assembly hole 13 formed through box 2 next to pin 3, coaxial with the latter and larger in diameter than ring 12. Hole 13, which after assembly may be closed by any known type of plug (not shown), is of such a size as to enable insertion, as far as rod 8, of a known type of tool designed to hold ring 12 and press it on to rod 8. In the case of a switch control 1 of the type described in Italian Patent Application N° 67441-A/84, filed on 2 May, 1984 by the present Applicant and entitled "Multiple-setting control for vehicle indicating and/or operating devices", the content of which is incorporated herein purely for reference purposes, hole 13 clearly provides for automatic assembly of switch 7. To do so, box 2 is first set up on an appropriately-equipped reference table, after which, switch 7, already pre-assembled in a separate assembly station, is inserted, by known handling means, inside housing 6, after first pre-assembling bushing 4 and lever 5 and positioning the connectors to be mated with connectors 9 in such a manner that the latter are engaged simultaneously when switch 7 is inserted inside housing 6. Having done so, lock ring 12 is then inserted through hole 13 on to rod 8. Clearly, when lever 5 is moved in the direction of the arrow into the position shown by the dotted line, rod 8 will also be displaced with it, thus activating switch 7. The latter is connected by connectors 9 to the town and road light control circuits on the vehicle in such a manner that partial displacement of lever 5, and consequently relatively limited displacement of rod 8, causes the road lights to come on for emergency flashing, and in such a manner that setting lever 5 as shown by the dotted line in Fig. 1 results in a switch from two to road lights or vice versa. In other words, partial pull-up of lever 5 causes the road lights to flash, whereas total pull-up, as far as the limit stop position of lever 5, causes the town lights to switch to road lights or vice versa, depending on which is already on when the lever is operated. When released, lever 5 returns to the position shown by the continuous black line in Fig. 1, until operated again. As shown in Figs. 2, 3 and 4, switch 7 according to the present invention comprises a frame 15, preferably made of plastic and essentially rectangular in shape; a slide 16 housed in axially-sliding manner inside frame 15 and having activating means projecting from frame 15 and consisting of control rod 8; a rocker arm 18 mounted in idle manner inside frame 15 and fitted angularly integral with a respective sliding blade contact 19; and at least one essentially-rectangular printed circuit 20 fitted with at least one connectors 9 and arranged against face 21 on frame 15 so as to close the latter and face sliding blade contact 19, the latter being designed to cooperate with respective circular conducting tracks 22 (Fig. 9) on the said printed circuit 20. Frame 15 is preferably provided with a supporting and shoulder base 23 designed to enable locking of frame 15 inside housing 6 and support of printed circuit 20. On the opposite side to that closed by printed circuit 20, frame 15 is also closed by a further printed circuit 25 arranged against face 26 on frame 15, opposite face 21, and also supported by base 23. Printed circuits 20 and 25 are secured integral with frame 15 by respective rivets 27 and are preferably provided with respective holes 28, the latter being arranged facing and coaxial with each other and engaged in idle manner by respective connecting pins 29 on rocker arm 18 which is thus supported in idle manner by printed circuits 20 and 25 inside the casing defined by the said printed circuits 20 and 25 and by frame 15. On the opposite side to base 23, frame 15 is provided with an opening 30 enabling exit of rod 8 which is preferably formed integral with slide 16, the latter being located inside frame 15, next to opening 30, and having an inner through opening 31 housing, at least partly, rocker arm 18 so as to reduce the size of switch 7. As shown in more detail in Figs. 5 and 6, slide 16 is shaped like a small, essentially-rectangular frame secured in sliding manner inside guides 32 (Fig. 3) formed inside frame 15 and housing flexible contrasting means consisting of helical springs 33 designed to impede travel of slide 16 towards rocker arm 18. Rod 8 is arranged with its axis parallel to that of guides 32 on frame 15, the said guides 32 being engaged by respective projecting side tabs 34 on the frame forming slide 16. A cross-piece 35 on the latter, located on the opposite side to rod 8 and projecting in relation to the plane in which the rest of slide 16 lies, is provided with an essentially-fork-shaped flexible centre projection 35a for receiving, in idle manner, an end fork 36 on transmission lever 37 carried on slide 16 and designed to turn rocker arm 18, as described later, following displacement of slide 16 towards the said rocker arm 18. Slide 16 is also provided with supporting pins 38 for a sliding-blade contact 39 located on the opposite side to contact 19 and designed to cooperate in sliding manner with conducting tracks 40 (Fig. 8), on printed circuit 25, located opposite and facing printed circuit 20. Connectors 9 are preferably formed integral with printed circuits 20 and 25 and provide for connecting tracks 40, the latter being shorter than printed circuit 25, to the circuit controlling emergency flashing of the road lights, and for connecting tracks 22, located round hole 28, to the parking light supply circuit on the vehicle and to the two circuits powering the road and town lights respectively.

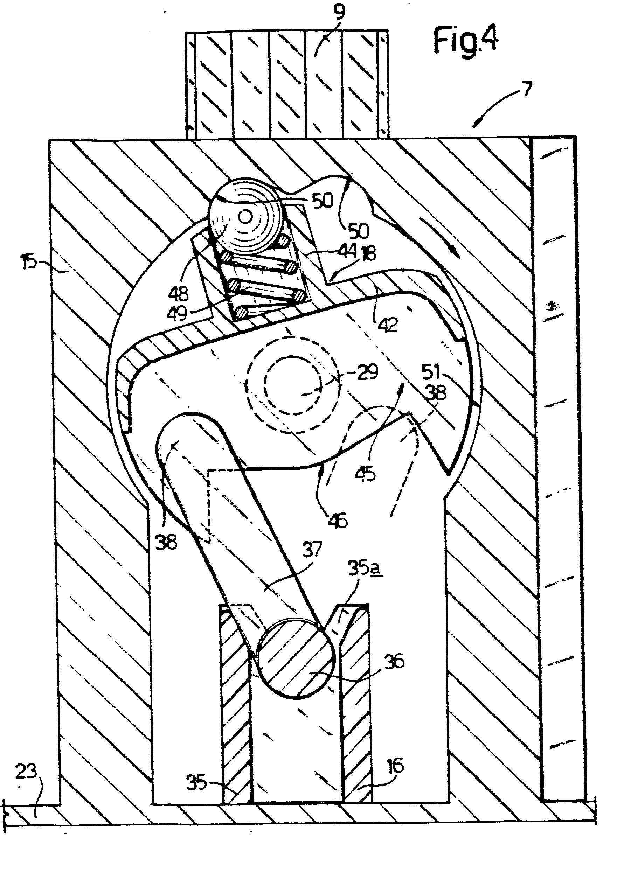

As shown in Fig. 7, rocker arm 18 comprises a rotary drum 42 fitted with sliding contact 19 and pins 29; a crank arm 43 formed integral with drum 42 and located inside opening 31 in the same plane as slide 16 and projecting in relation to drum 42; and a radial housing 44 for retaining means designed to set rocker arm 18 selectively in two different angular positions in which contact 19 engages different conducting tracks 22 on printed circuit 20. Drum 42 is provided with an inner cavity 45, designed to house loosely end 38 opposite end 36 on lever 37, and with a circumferential opening 46 enabling access to cavity 45, the size of the said opening 46 being such as to be engaged by lever 37 and to enable the latter to turn freely on projection 35a. The said retaining means comprise a ball 48, housed radially inside rocker arm 18, and a contrast spring 49 for ball 48, the said spring 49 being designed to push the said ball 48 out of housing 44 and so cause it to engage, in reversible manner, a pair of cutouts 50 (Fig. 4) angularly offset in relation to the rotation axis of rocker arm 18 and formed inside frame 15, the latter being shaped internally round drum 42 in such a manner as to form cylindrical cavity 51. Drum 42 and housing 44, both integral with crank arm 43, are arranged facing slide 16 and housed between the latter and printed circuit 20 in such a manner as to be coplanar with crosspiece 35 and lever 37, the ends 36 and 38 of the said lever 37 engaging both slide 16 and rocker arm 18. On fork end 36, lever 37 is provided with a projection 60 facing printed circuit 25 and, therefore, essentially coplanar with crank arm 43 and slide 16 inside opening 31 on the latter and essentially on a level with crosspiece 35. Projection 60 is engaged by a torsion spring 61 also essentially fork-shaped and secured to pin 62 on crank arm 43. Next to pin 62, the said crank arm 43 is provided with a shoulder block 63 for spring 61, the said block 63 being designed to limit rotation of spring 61 on pin 62 and so displace spring 61 in angularly integral manner with crank arm 43 subsequent to rotation of drum 42; end 38 on lever 37 being designed to cooperate with the said drum 42 subsequent to displacement of slide 16 towards drum 42, in such a manner as to turn the entire rocker arm 18.

Switch 7 operates as follows. In the idle position shown on the attached drawings, as slide 16 is held by springs 33 against base 23, no contact exists between end 38 and drum 42, the said end 38 moving freely inside cavity 45 in drum 42 and being in no way affected by rotation of the latter. The said drum 42, on the other hand, is locked by ball 48 in one or other of the two angular positions provided for by cutouts 50. For example, in the arrangement shown in Fig. 4, the cutout 50 engaged by ball 48 is the one on the left, in which position, contact 19 engages only two of tracks 22, i.e. supply track 22 connected to the parking light circuit on the vehicle and, for example, track 22 connected to the town light supply circuit. Consequently, if the parking lights on the vehicle are turned on, current is also supplied to track 22 supplying printed circuit 20, so as to turn on the town lights via contact 19. Obviously, for disconnecting the town lights with the parking lights on, provision need simply be made for a further known type of switch forming part of the main electric circuit on control 1 and designed to cut off supply to supply track 22. When pull is exerted on lever 5 for flashing the road lights, slide 16 is moved away from base 23, by means of rod 8, and towards rocker arm 18. Consequently, springs 33 are compressed, end 38 moves freely inside cavity 45, still not contacting drum 42, and contact 39 slides over printed circuit 25 as far as the starting point of tracks 40, thus causing the road lights to come on. As, on account of the contrasting action exerted by springs 33, the aforementioned position is obviously unstable, when lever 5 is released, springs 33 reset slide 16 against base 23, thus causing contact 39 to abandon tracks 40 and so disconnect the road lights for producing the required flashing effect. Vice versa, for switching from town to road lights, lever 5 need simply be pulled in such a manner as to shift slide 16 as far as the limit stop position. This results, firstly, in the road lights being turned on as a result of contact 39 engaging tracks 40 and, secondly, in end 38 cooperating with drum 42 and producing such a torque on the same as to overcome the resistance of spring 49, push ball 48 out of cutout 50 and turn drum 42 in the direction of the arrow (Fig. 4) so as to insert ball 48 inside the other cutout 50. This obviously causes contact 19 to shift in relation to tracks 22 in such a manner as to abandon track 22 connected to the town lights and to engage track 22 connected to the road light supply circuit on the vehicle. In such a position, therefore, the road lights remain on when lever 5 is released and tracks 40 abandoned by contact 39. Rotation of drum 42 also produces simultaneous rotation of the whole of rocker arm 18 and, consequently, also of crank arm 43 and spring 61, the latter being displaced by shoulder block 63. Spring 61 thus exerts pressure on projection 60 so as to exert sufficient torque on end 36 to turn the latter inside projection 35a and shift end 38 from the position shown by the continuous black line (Fig. 4) into the position shown by the dotted line (Fig. 4). When the lever 5 is next operated, lever 37, now in a position symmetrically opposite to that described previously, turns rocker arm 18 the opposite way back to the starting position, thus disconnecting the road lights by causing contact 19 to abandon road light supply track 22.

The advantages afforded by the switch device according to the present invention and by the switch control produced employing the same will be clear from the foregoing description. To those skilled in the art it will also be clear that changes may be made to the arrangement described herein without, however, departing from the scope of the present claims.

**Claims**

1. Switch device, particularly for a vehicle switch control (1), comprising a load-bearing frame (15), a respective printed circuit (20) having respective conducting tracks (22), a rocker arm (18) housed in idle manner inside the said frame (15) and fitted, facing the said printed circuit (20), with a respective sliding blade contact (19) designed to cooperate with the said conducting tracks (22), a slide (16) housed in axially-sliding manner inside the said frame (15) and having activating means (8) projecting from the same, retaining means (48) for selectively setting the said rocker arm (18) in two different angular positions, in which different conducting tracks (22) on the said printed circuit (20) are engaged by the said sliding contact (19), and transmission means (37, 61) for selectively and alternatively displacing the said rocker arm (18) from one to the other of the said two angular positions following displacement of the said slide (16) towards the said rocker arm (18), characterized in that said load bearing frame (15) is closed in correspondence with opposite faces (21, 26) of the same by a pair of facing printed circuits (20, 25) secured integral with said frame (15) in such a manner as to define, with the said frame (15), a casing for housing said slide (16) and said rocker arm (18);

said printed circuits (20, 25) having supporting holes (28) in which respective opposite connecting pins (29) of said rocker arm are idly secured, a first (20) of said printed circuits being provided with circular conducting tracks defining said conducting tracks (22) for said sliding contact (19) of said rocker arm (18) and a second (25) of said printed circuits being provided with a pair of rectilinear conducting tracks (40) faced to said circular conducting tracks (22) and adapted to be engaged by a second sliding contact (39) rigid with said slide, when the latter is displaced towards said rocker arm (18); said slide (16) being secured in sliding manner against flexible contrasting means (33) designed to oppose to said displacement towards said rocker arm (18) inside respective guide (32) formed laterally inside the said frame and being provided with a through opening (31) housing at least partially said rocker arm (18) substantially co-planar with said slide (16); said transmission means comprising a lever (37), a first end (38) of which is housed in mobile manner inside a cavity (45) formed inside the rocker arm (18) through a circumferential opening (46) thereof, and a second, essentially-fork-shaped, end (36) of which is hinged inside a flexible fork-shaped projection (35a) on the said slide (16); and a torfion spring (61) also essentially fork-shaped, secured at one end to said rocker arm (18) and at the other end to said second end (36) of said lever (37).

2. Switch device according to claim 1, characterized in that said activating means comprise a rod (8) integral with the said slide (16) and designed to be secured to a lever (5) controlling the said switch control; the said rod (8) being arranged with its axis parallel to that of the said guides (32) on the frame.

3. Switch device according to Claim 1 or 2, characterized by the fact that the said rocker arm (18) comprises a rotary drum (42) having the said sliding contact (19), and provided with said opposite connecting pins (29), which are coaxial, and with said inner cavity (45) to which access is afforded through said circumferential opening (46), the latter being formed on the drum (42) itself; said rocker arm (18) further comprising a crank arm (43) angularly integral with and projecting in relation to the said drum (42), and a radial housing (44) for the said retaining means (48).

4. Switch device according to Claims 2 and 3, characterized by the fact that the said crank arm (47) is housed inside the said opening (31) on the side slide (16), whereas the said drum (42) with the said housing, both formed integral with the said crank arm (43), are arranged facing the said slide (16) and housing between the latter and the said first printed circuit (20).

5. Switch device according to one of the foregoing claims, characterized in that said retaining means comprise a ball (48), housed radially inside the said rocker arm (18); and a contrast spring (49) for the said ball (48); the latter being designed to engage in reversible manner, via the said spring (49), a pair of cutouts (50) angularly offset in relation to the rotation axis of the said rocker arm (18) and formed inside the said frame (15).

6. Switch device according to one of the foregoing Claims from 3 to 5, characterized by the fact that said fork-shaped torsion spring (61) is secured to a pin (62) on the said crank arm (43) on the said rocker arm (18) and engaging a projection (60) on the said second end (36) of the said lever (37).

7. Switch device according to Claim 6, characterized by the fact that the said crank arm (43) is provided with a shoulder block (63) for the said fork spring (61), the said block (63) being designed to turn the said spring (61) integral with the said drum, in such a manner as to turn the said lever (37) inside the said fork projection (35a) and so displace the said first end (38) of the said lever (37) inside the said cavity (45); the said first end (38) being designed to cooperate with the said drum (42), subsequent to displacement of the said slide (16) in the direction of the said drum (42), in such a manner as to turn the said rocker arm (18).

8. Switch control (1) according to one of the foregoing Claims 2 to 7, characterized by the fact that the said control lever (5) is provided with a through hole (10) inside which a rod (8) for controlling the said switch device (7) is secured by means of a spring shoulder ring (12), and by the fact that a supporting box (2), to which the said lever (5) is secured and inside which the said switch device (7) is housed, is provided with a hole (13) coaxial with the said control rod (8), larger in diameter than the said spring shoulder ring (12) and enabling assembly of the latter on the said control rod (8).

**Patentansprüche**

1. Schaltsystem, insbesondere für die Schaltkontrolle (1) eines Fahrzeugs, bestehend aus einer Stützvorrichtung (15), einem entsprechenden gedruckten Schaltkreis (20), der mit entsprechenden Führungsrillen (22) versehen ist, einem Kipphebel (18), in loser Art im Innern der Vorrichtung (15) montiert und ausgestattet mit, indem er dem gedruckten Schaltkreis (20) gegenüberliegt, einer rotierenden Kontaktfolie (19), so gefertigt, daß sie mit den besagten Führungsrillen (22) zusammenarbeitet, einer Drehscheibe (16), die, indem sie auf einer Achse gleitet, im Innern der besagten Vorrichtung (15) montiert ist und mit Aktivierungsvorrichtungen (8) versehen ist, von denselben geführt, Halterungen (48), um den Kipphebel (18) in zwei verschiedene angolare Positionen zu bringen, in denen verschiedene Führungsrillen (22) auf dem besagten gedruckten Schaltkreis (20) durch besagte Kontaktfolien (19) gekoppelt sind, Übersetzungsvorrichtungen (37, 61) für teilweises und abwechselndes Versetzen des Kipphebels (18) von der einen in die andere der besagten angolaren Positionen, indem sie dem Versetzen der besagten Drehscheibe (16) in Richtung des besagten Kipphebels (16) folgen, dadurch gekennzeichnet, daß besagte Stützvorrichtung (15) geschlossen ist, im Verhältnis zu den gegenüberliegenden Seiten (21, 26) derselben, durch ein Paar gegenüberliegende gedruckte Schaltkreise (20, 25), vollständig durch besagte Vorrichtung (15) gesichert, in der Art, daß sie, zusammen mit besagter Vorrichtung (15), ein Gehäuse zur Aufnahme der besagten Drehscheibe (16) und des besagten Kipphebels (18) bilden; besagte gedruckte Schaltkreise (20, 25) haben Stützvertiefungen (28) in welchen die entsprechenden gegenüberliegenden Verbindungsbolzen (29) des besagten Kipphebels lose gesichert sind, ein ersterer der gedruckten Schaltkreise (20) ist mit umlaufenden Führungsrillen versehen, die besagte Führungsrillen (22) für besagte Kontaktfolie (19) auf besagtem Kipphebel (18) darstellen und ein zweiterer der gedruckten Schaltkreise (25), der mit einem Paar geraden Führungsrillen (40) versehen ist, gegenüber besagten umlaufenden Führungsrillen (22) und so eingerichtet, daß er mit einer zweiten Kontaktfolie (39) gekoppelt werden kann, fest mit besagter Drehscheibe verbunden, wenn letztere in Richtung des besagten Kipphebels (18) verschoben wird; besagte Drehscheibe (16) ist in gleitender Weise gegen flexible Kontrastvorrichtungen (33) gesichert, so gefertigt, daß sie sich besagter Verschiebung in Richtung besagtem Kipphebel (18) entgegenstellen, im Innern einer entsprechenden Führung (32), seitlich im Innern besagter Stützvorrichtung geformt und versehen mit einer durchgehenden Öffnung (31), die mindestens teilweise an besagtem Kipphebel (18) montiert ist, grundsätzlich auf gleicher Ebene mit besagter Drehscheibe (16); besagte Übersetzungsvorrichtungen bestehen aus einem Hebel (37), wobei eines seiner Enden (38) mobil im Innern einer Vertiefung (45), die im Innern des Kipphebels (18) durch eine runde Öffnung (46) geformt ist, sitzt, und sein zweites, grundsätzlich gabelförmiges Ende (36) im Innern einer flexiblen gabelförmigen Vorsprungs (35a) in besagter Drehscheibe (16) eingehängt ist; einer Torsionsfeder (61), ebenso grundsätzlich gabelförmig, an einem Ende mit dem Kipphebel (18) gesichert und am anderen Ende mit dem zweiten Ende (36) des besagten Hebels (37).

2. Schaltsystem nach Anspruch 1, dadurch gekennzeichnet, daß besagte Aktivierungsvorrichtungen eine Pleuelstange (8) umfassen, die mit besagter Drehscheibe (16) ein Ganzes bildet und so geformt ist, daß sie an einem Hebel (5) gesichert werden kann und damit die besagte Schaltkontrolle kontrolliert; besagte Pleuelstange (8) ist so montiert, daß ihre Achsen parallel zu denen der besagten Führungen (32) auf der Vorrichtung laufen.

3. Schaltsystem nach Anspruch 1 oder 2, dadurch gekennzeichnet, daß der Kipphebel (18) aus einer Trommel (42) besteht, die besagte Kontaktfolie (19) besitzt, und mit besagten gegenüberliegenden Verbindungsbolzen (29) versehen ist, die koaxial angeordnet sind, und mit besagter Vertiefung (45) im Innern, die durch besagte runde Öffnung (46) zugänglich ist, die letztere ist auf der Trommel (42) selbst geformt; besagter Kipphebel (18) besteht weiterhin aus einem Kurbelarm (43), im Winkel eine Einheit bildend und in Bezug auf besagte Trommel (42) eingerichtet, und einem radialen Gehäuse (44) für besagte Halterungen (48).

4. Schaltsystem nach Anspruch 2 oder 3, dadurch gekennzeichnet, daß besagter Kurbelarm (43) sich in besagter Öffnung (31) befindet, die auf besagter Drehscheibe (16) sitzt, an der Stelle, wo besagte Trommel (42) mit besagtem Gehäuse, beide als ein Teil mit dem besagten Kurbelarm (43) geformt, gegenüber besagter Drehscheibe (16) montiert sind, zwischen der letzteren und dem besagten ersten gedruckten Schaltkreis (20).

5. Schaltsystem nach einem der vorangegangenen Ansprüche, dadurch gekennzeichnet, daß besagte Halterungen aus einem Ball (48) bestehen, der radial im Innern des Kipphebels (18) montiert ist, und einer Kontrastfeder (49) für besagten Ball (48); die letztere ist so geformt, daß sie, in umgekehrter Weise, über besagte Feder (49), an ein Paar Schalter (50) eingehängt ist, die sich im gegengewichtigen Winkel im Verhältnis zur Rotationsachse des besagten Kipphebels (18) befinden und im Innern besagter Vorrichtung (15) montiert.

6. Schaltsystem nach einem der vorangegangenen Ansprüche 3 bis 5 dadurch gekennzeichnet, daß besagte gebalförmige Torsionsfeder (61) an einem Bolzen (62), auf besagtem Kurbelarm (43), auf besagtem Kipphebel (18) gesichert ist und an einem Vorsprung (60) auf besagtem zweitem Ende (36) besagten Hebels (37) eingehängt ist.

7. Schaltsystem nach Anspruch 6, dadurch gekennzeichnet, daß besagter Kurbelarm (43) mit einem Schulterblock (63) versehen ist, für besagte Gabelfeder (61), der besagte Block (63) ist so geformt, daß er besagte Feder (61) gemeinsam mit besagter Trommel dreht, in der Art, daß besagter Hebel (37) im Innern des besagten Gabelvorsprungs (35a) gedreht wird und damit das besagte erste Ende (38) besagten Hebels (37) in besagter Vertiefung (45); das besagte erste Ende (38) ist so geformt, daß es mit besagter Trommel (42) zusammenarbeitet, nachfolgend zur Verschiebung besagter Drehscheibe (16) in Richtung besagter Trommel (42), in der Art, daß der besagte Kipphebel (18) zurückgeholt wird.

8. Schaltsystem nach einem der vorangegangenen Ansprüche 2 bis 7, dadurch gekennzeichnet, daß besagter Kontrollhebel (5) mit einer Durchgangsöffnung (10) versehen ist, in der eine Pleuelstange (8) zur Kontrolle des besagten Schaltsystem (7) mit Hilfe von Vorrichtungen in der Art einer Schulterringfeder (12) gesichert ist und dadurch, daß ein Stützbehälter (2), mit dem besagter Hebel (5) gesichert ist und in dem sich besagtes Schaltsystem (7) befindet, mit einem Loch (13) versehen ist, koaxial zu besagter Kontroll-Pleuelstange (8), mit breiterem Durchmesser als die besagte Schulterringfeder (12) und damit das Zusammenwirken der letzteren mit besagter Kontroll-Pleuelstange (8) ermöglicht.

## Revendications

1. Dispositif à commutateur, particulièrement pour une commande à commutateur de véhicule (1), comprenant un châssis support de charge (15), un circuit imprimé respectif (20) ayant des pistes conductrices respectives (22), un bras de renversement (18) logé de manière folle à l'intérieur du châssis (15) et muni, en regard du circuit imprimé (20), d'un contact à lame coulissante (19) respectif conçu pour coopérer avec les pistes conductrices (22), un coulisseau (16) logé de manière axialement coulissante à l'intérieur du châssis (15) et ayant des moyens d'actionnement (8) faisant saillie par rapport à celui-ci, des moyens de retenue (48) pour placer sélectivement ledit bras de renversement (18) dans deux positions angulaires différentes, dans lesquelles différentes pistes conductrices (22) du circuit imprimé (20) viennent en prise avec le contact coulissant (19), et des moyens de transmission (37, 61) pour sélectivement et alternativement déplacer le bras de renversement (18) de l'une à l'autre des deux position angulaires consécutivement au déplacement du coulisseau vers le bras de renversement (18), caractérisé en ce que le châssis support de charge (15) est fermé en correspondance avec des faces opposées (21, 26) de celui-ci par une paire de circuits imprimés en vis-à-vis (20, 25) solidarisés au châssis (15) de manière à définir, avec le châssis (15), un boîtier pour loger le coulisseau (16) et le bras de renversement (18), lesdits circuits imprimés (20, 25) ayant des orifices de support (28) dans lesquels des broches de connexion opposées respectives (29) du bras de renversement (18) sont fixées de manière folle, un premier (20) desdits circuits imprimés étant muni de pistes conductrices circulaires définissant lesdites pistes conductrices (22) pour le contact coulissant (19) du bras de renversement (18) et un second (25) desdits circuits imprimés étant muni d'une paire de pistes conductrices rectilignes en regard desdites pistes conductrices circulaires (22) et conçues pour venir en prise avec un second contact coulissant (39) issu de matière avec ledit coulisseau, quand ce dernier est déplacé vers le bras de renversement (18), ledit coulisseau (16) étant solidarisé de manière coulissante contre des moyens d'opposition flexibles (33) conçus pour s'opposer audit déplacement vers le bras de renversement (18) à l'intérieur de guides respectifs (32) formés latéralement à l'intérieur du châssis et étant munis d'une ouverture traversante (31) logeant au moins partiellement le bras de renversement (18) sensiblement coplanaire au coulisseau (16), lesdits moyens de transmission comprenant un levier (37) dont une première extrémité (38) est logée de manière mobile à l'intérieur d'une cavité (45) formée à l'intérieur du bras de renversement (18) à travers une ouverture circonférencielle (46) de celui-ci, et dont une seconde extrémité (36) sensiblement conformée en fourche est accrochée à l'intérieur d'une saillie flexible conformée en fourche (35a) du coulisseau (16), et un ressort de torsion (61) également sensiblement conformé en fourche est solidarisé à une extrémité dudit bras de renversement (18) et à l'autre extrémité d'une seconde extrémité (36) du levier (37).

2. Dispositif à commutateur selon la revendication 1, caractérisé en ce que lesdits moyens d'actionnement comprennent une tige (8) issue de matière avec le coulisseau (16) et conçue pour être fixée à un levier (5) commandant la commande à commutateur, la tige (8) étant disposée de manière que son uxe soit parallèle à celui desdits guides (32) du châssis.

3. Dispositif à commutateur selon l'une des revendications 1 ou 2, caractérisé en ce que ledit bras de renversement (18) comprend un tambour rotatif (42) ayant le contact coulissant (19) et muni de broches de connexion opposées (29), qui sont coaxiales, et à ladite cavité interne (45) dont l'accès est permis à travers l'ouverture circonférencielle (46), cette dernière étant formée sur le tambour lui-même, le bras de renversement (18) comprenant en outre un vilebrequin (43) angulairement issue de matière avec et faisant saillie par rapport un tambour (42), et une enveloppe radiale (44) pour lesdits moyens de retenue (48).

4. Dispositif à commutateur selon l'une des revendications 2 ou 3, caractérisé en ce que le vilebrequin (43) est logé à l'intérieur de l'ouverture (31) du coulisseau (16), tandis que le tambour (42) avec ladite enveloppe, tous les deux issus de matière avec le vilebrequin (43) sont disposés en regard du coulisseau (16) et logés entre ce dernier et le premier circuit imprimé (20).

5. Dispositif à commutateur selon l'une des revendications précédentes, caractérisé en ce que lesdits moyens de retenue comprennent une bille (48), logée radialement à l'intérieur du bras de renversement (18), et un ressort d'opposition (49) pour ladite bille (48), cette dernière étant conçue pour venir en prise, de manière réversible, par l'intermédiaire du ressort (49), avec une paire de découpes (50) angulairement disposées en relation avec l'axe de rotation de l'arbre de renversement et formées à l'intérieur du châssis (15).

6. Dispositif à commutateur selon l'une des revendications 3 à 5, caractérisé en ce que le ressort de torsion conformé en fourche (61) est solidarisé à une broche (62) du vilebrequin (43) de l'arbre de renversement (18) et engrenant une saillie (60) de la seconde extrémité (36) du levier (37).

7. Dispositif à commutateur selon la revendication 6, caractérisé en ce que le vilebrequin (43) est muni d'un bloc d'épaulement (63) pour ledit ressort en fourche (61), ce bloc (63) étant conçu pour faire tourner le ressort (61) en même temps que le tambour (42) de manière à faire tourner le levier (37) à l'intérieur de la saillie en forme de fourche (35a) et à déplacer ainsi la première extrémité (38) du levier (37) à l'intérieur du levier (45), la première extrémité (38) étant conçue pour coopérer avec le tambour (42), consécutivement à un déplacement du coulisseau (16) dans la direction du tambour (42) de manière à faire tourner le bras de renversement (18).

8. Commande à commutateur (1) selon l'une des revendications 2 à 7, caractérisée en ce que le levier de commande (5) est muni d'un trou traversant (10) à l'intérieur duquel une tige (8) pour commander le dispositif à commutateur (7) est fixée au moyen d'un anneau élastique d'épaulement (12), et en ce qu'une boîte de support (2), à laquelle le levier (5) est fixé et à l'intérieur de laquelle le dispositif à commutateur (7) est logé, est munie d'un orifice coaxial à la tige de commande (8), de diamètre supérieur à celui de l'anneau élastique d'épaulement (12) et permettant l'assemblage de ce dernier sur la tige de contrôle (8).

Fig.1

Fig.6

1

Fig.2

Fig.7

Fig.5

Fig.3

Fig.4

Fig. 8

Fig. 9